# EUROPEAN PATENT APPLICATION

(11) **EP 4 810 333 A1**
(43) Date of publication of application: **23.09.2026**
(21) Application number: 26165876.9
(22) Date of filing: 18.03.2026
(51) Int. Cl.: B60T 13/26, B60T 8/17, B60T 13/66, B60T 17/22, B61L 15/00

(54) **SYSTEM AND METHOD FOR ACTIVATING AN ELECTRONIC PROCESSING MEANS OF A VEHICLE, AND CONTROL SYSTEM**

(30) Priority: 21.03.2025 IT 202500005817
(71) Applicant: Faiveley Transport Italia S.p.A., 10045 Piossasco (TO) (IT)
(72) Inventor: FREA, Matteo, I-10060 CANTALUPA (Torino) (IT); DEZIO, William, I-24050 ZANICA (Bergamo) (IT)
(74) Representative: Cristinelli, Luca

(57) **Abstract**

An activation system (200) for an electronic processing means (202) of a vehicle (V), particularly a railway vehicle, arranged to:
- when a pressure value of a fluid in a pneumatic pipe (BP) of the vehicle (V) exceeds a first pressure threshold value (S1), enabling the supply of an electrical power supply (PS) to the electronic processing means (202) of the vehicle.

An activation method and a control system for a vehicle are also described.

## Description

### Technical field

The present invention generally lies in the field of vehicles; in particular, the invention relates to an activation system for an electronic processing means of a vehicle, to a method for activating an electronic processing means of a vehicle, and to a control system for a vehicle.

### Background art

In the present section, the prior art relating to activation systems arranged to control the activation of at least one processing/control means installed in at least one vehicle will be discussed.

In the following, reference will be made to the field of railway vehicles, in particular the field of railway vehicles for the transport of goods; however, what is described may find analogous application also for vehicles in further fields.

It is known that a railway train for the transport of goods is composed of a plurality of railway vehicles for the transport of goods, which comprise at least one pulling locomotive followed by at least one freight wagon.

The freight transport industry is technologically far from that of passenger transport. Typical braking systems of freight wagons are purely mechanical and pneumatic. Pneumatics are used to propagate the braking request from the locomotive to the wagons through a general brake pipe, BP.

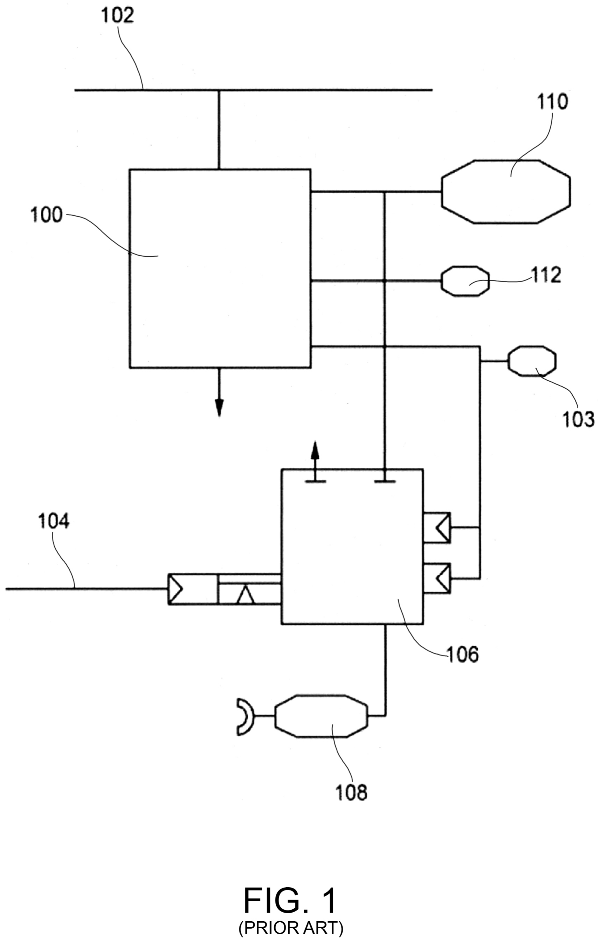

As can be observed in FIG. 1, locally on a vehicle for the transport of goods, a distributor 100 reacts to the pressure of the general brake pipe 102 through the generation of a command pressure DC 103. This command pressure 103 and a bogie load pressure PL 104 are supplied to a self-regulating relay valve 106 which exerts the pressure in the brake cylinders 108, generating the braking force through levers and calipers.

As can be observed in FIG. 1, the distributor 100 and the self-regulating relay valve 106 are also connected to a brake power reservoir 110. The distributor 100 receives (during braking)/generates (during release) a braking reference pressure 112.

This basic architecture may be modified depending on the braking forces required, according to the type of actuators used (block brake or disc brake).

Freight wagons usually do not include electronic means, on the one hand because the increase in performance associated with the use of electronic means is not necessary and on the other hand because battery lines that run from the locomotive to the subsequent freight wagons are not present. This lack of battery lines makes the use of electronic means problematic due to the lack of availability of electrical energy.

In the absence of battery lines it would be possible to rely on energy possibly recovered by means of appropriate energy recovery means/systems (for example related to the recovery of braking energy), also known as "power harvester". Disadvantageously, the available recovered energy is usually not sufficiently high to ensure the operation of such electronic means for long operating periods.

A known function is the brake test. Due to the absence of electronic means, this test is carried out manually by the driver following a defined process. This process can be summarised with the following steps:
- checking the brake release status on the first vehicle following the locomotive;
- determining the release status and the status of the brakes on all vehicles (on both sides of the train);
- brakes that are disengaged and are not marked as defective must be engaged;
- checking the correct setting of the brake lever position G/P;
- changing the correct setting of the load changeover (if available);
- checking the correct coupling.

Disadvantageously, such a brake testing process, being carried out manually without the aid of electronic means, requires time and is more prone to errors.

What has been described above applies analogously to vehicles of further sectors, for example vehicles or convoys on rubber wheels, which need to optimise the management of the energy available for possible electronic controls.

### Summary of the invention

An object of the present invention is to propose a solution that allows improving the management of the activation of an electronic processing means installed on board a vehicle, in order to reduce its energy consumption.

A further object is to enable the use of electronic processing means on board a vehicle, even in the case of limited availability of electrical power supply along the vehicle or along a train including a plurality of vehicles.

A further object of the present invention is to provide a solution that can also be used in the field of vehicles for the transport of goods, and that allows exploiting the presence of electronic processing means on board such vehicles in order to make the freight transport field more competitive, for example through the renewal of the manual implementation of existing functions and the introduction of further functionalities. In fact, most of the new technological solutions on vehicles for the transport of goods would require the use of electronic processing means. The presence of such electronic processing means would make it possible to implement existing functions in a different way (less time-consuming/more cost-efficient and more reliable in terms of the objectivity of the result) and would also make it possible to add new functionalities.

The technology to be developed based on the electronics exists, e.g. energy harvesters, batteries, sensors, GPS, wireless communications, microcontrollers. However, in order to use such functions on a vehicle for the transport of goods it is necessary to make compromises in order to limit their energy consumption.

Limiting energy consumption is the key, especially in the case of vehicles for the transport of goods, which often remain parked, even for long periods of time, in depots without being used.

The above-mentioned and other objects and advantages are achieved:
- according to a first aspect of the invention, by an activation system having the features defined in claim 1;
- according to a second aspect of the invention, by a control system having the features defined in claim 8;
- according to a third aspect of the invention, by an activation method having the features defined in claim 22;

Preferred embodiments of the invention are defined in the dependent claims, the content of which is to be understood as forming an integral part of the present description.

### Brief description of the drawings

The functional and structural features of some preferred embodiments of an activation system, an activation method and a control system according to the invention will now be described. Reference is made to the attached drawings, in which:
- Figure 1 illustrates an exemplary structure of a vehicle for the transport of goods according to the prior art;
- Figure 2 illustrates a first embodiment of an activation system according to the present invention;
- Figure 3 illustrates a further embodiment of an activation system according to the present invention;
- Figure 4 illustrates an exemplary implementation of an activation system;
- Figure 5 illustrates an embodiment of a control system according to the present invention;
- Figure 6 illustrates a further embodiment of a control system according to the present invention.
- Figure 7 illustrates an exemplary pressure trend in a pneumatic pipe of the vehicle.

### Detailed description

Before explaining in detail a plurality of embodiments of the invention, it should be clarified that the invention is not limited in its application to the construction details and to the configuration of the components presented in the following description or illustrated in the drawings. The invention is capable of assuming other embodiments and of being implemented or carried out in practice in various ways. It should also be understood that the phraseology and terminology have a descriptive purpose and should not be regarded as limiting. The use of "include" and "comprise" and their variations is to be understood as including the elements listed thereafter and their equivalents, as well as additional elements and the equivalents thereof.

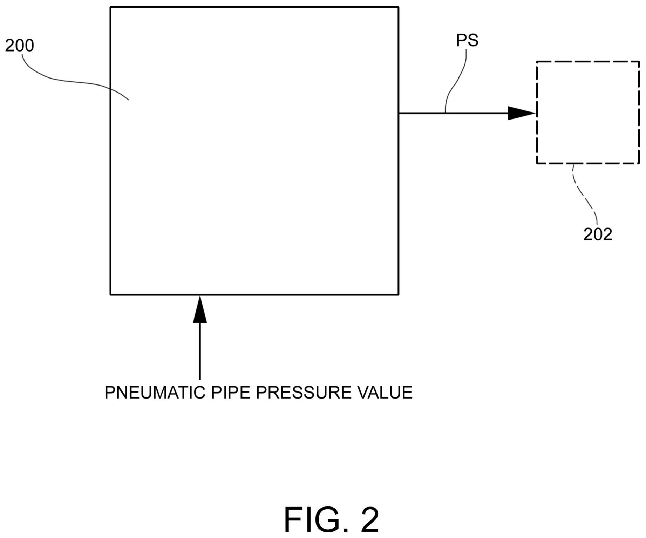

With initial reference to figure 2, an embodiment of an activation system 200 for an electronic processing means 202 of a vehicle is described below.

For example, the vehicle may be a railway vehicle (e.g. a passenger transport vehicle or a vehicle for the transport of goods/a freight wagon, etc...).

The vehicle comprises a pneumatic pipe BP. Preferably, the pneumatic pipe BP of the vehicle may be a brake pipe arranged to convey a braking fluid. For example, the braking fluid may be compressed/pressurised air which may be compressed by an air compressor. For example, the vehicle may be configured so that the vehicle brakes are actuated when the pressure of the braking fluid (compressed/pressurised air) in the pneumatic brake pipe falls below a certain pressure level. For example, the brake pipe may typically operate in a pressure range of 0 Bar - 5 Bar, wherein:
- 5 Bar is a brake released condition;
- below about 0.5 Bar is a fully applied brake condition or vehicle switched off.

When a pressure value of a fluid in the pneumatic pipe BP of the vehicle exceeds a first pressure threshold value S1, the activation system 200 is arranged to enable the supply of an electrical power supply PS to the electronic processing means 202 of the vehicle.

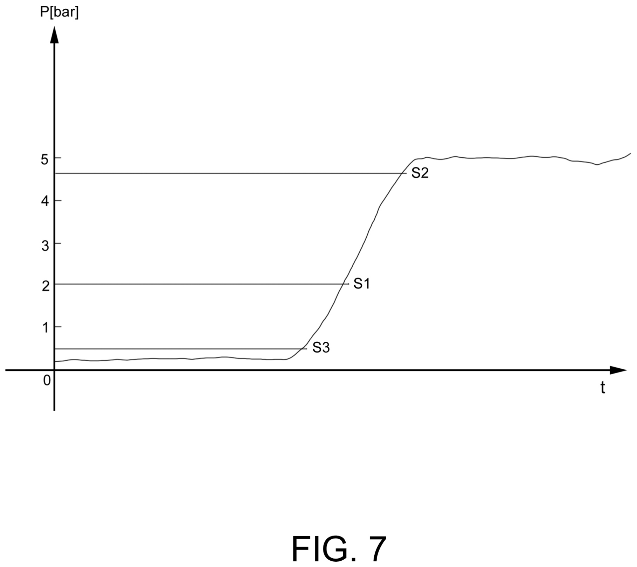

By way of non-limiting example, considering for instance a brake pipe operating between 0 Bar and 5 Bar (as explained in the example reported above), the first pressure threshold value S1 may be comprised between 1 bar and 3 bar, particularly 2 bar (see for example figure 7). In general, the exceeding of the first pressure threshold value is set at a value such that no modification occurs in the forces applied to the braking system.

Preferably, by way of non-limiting example, the electronic processing means 202 may be or comprise at least one among: a control circuit, a controller, a microcontroller, a processor, a microprocessor, an FPGA, a PLC, a processing unit, or the like.

Thanks to the activation system 200, the electrical power supply PS is not always supplied to the electronic processing means 202 of the vehicle. In fact, the electronic processing means 202 of the vehicle will be able to assume a switched-on state only when supplied with power. Keeping the electronic processing means 202 of the vehicle always switched on/supplied would cause a waste of energy if such electronic processing means had no function to perform at that moment. Advantageously, the activation system 200 may selectively supply the power supply PS to the electronic processing means 202 of the vehicle, so that such electronic processing means may assume its switched-on state when a specific condition occurs that is indicative of the need to supply power to the electronic processing means.

By way of example, the electrical power supply PS to be supplied to the electronic processing means 202 of the vehicle may be generated by a power supply means 302. Such power supply means may be coupled to the activation system 200 or be comprised in the activation system 200.

By way of non-limiting example, the power supply means 302 may be or comprise at least a battery or an accumulator. By way of further non-limiting example, the power supply means 302 may deliver a voltage of 24 Vdc.

Preferably, the power supply means 302 may be arranged to store the electrical power supply PS to be supplied to the electronic processing means 202 of the vehicle. Still by way of example, the power supply means 302 may be arranged to store the electrical power supply provided by a source external to the vehicle (for example a power supply catenary) or generated by an energy harvesting/recovery system ("power harvester") arranged to generate/convert energy from the environment into electrical energy. For example, the energy harvesting/recovery system may be or comprise at least one among an axle generator, a photovoltaic panel, a turbine, a thermoelectric generator. In a further example, the energy harvesting/recovery system may convert the energy spent for performing a braking into electrical energy.

Preferably, when it receives a shutdown signal 204 from said electronic processing means 202, the activation system 200 may be arranged to interrupt or prevent the supply of the electrical power supply PS to the electronic processing means 202.

In other words, the activation system 200 may interrupt or prevent the supply of the electrical power supply PS to the electronic processing means 202, causing the electronic processing means 202 to switch to the switched-off condition, when the electronic processing means 202 signals, by means of the shutdown signal, that it is not necessary to receive the power supply PS and that it can be switched off.

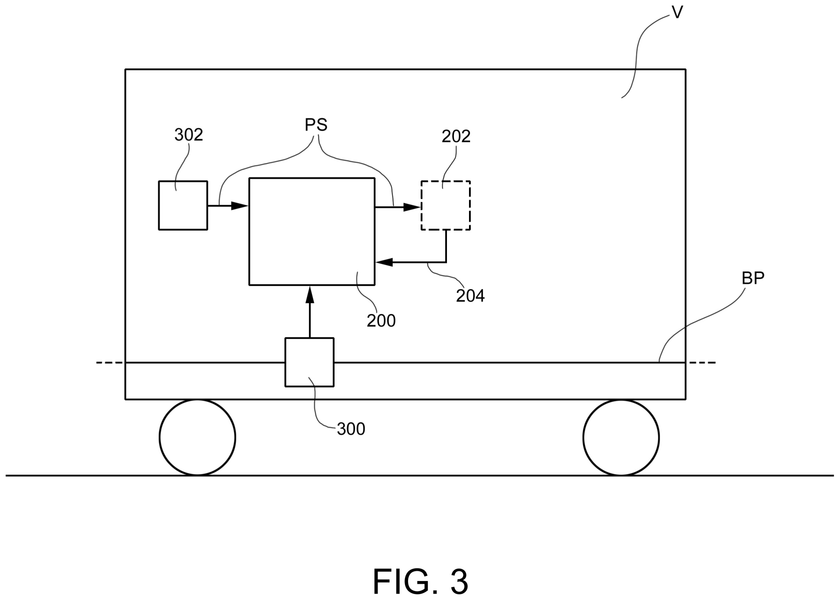

Preferably, as observable in figure 3, the activation system 200 may comprise, or be coupled to, a pressure sensor means 300 arranged to monitor the pressure value of the fluid in the pneumatic pipe BP of the vehicle V.

Preferably, the pressure sensor means 300 may:
- be a pressure switch or comprise a pressure switch; or,
- be a pressure transducer or comprise a pressure transducer.

By way of example, a pressure switch is a device that may assume at least two states and that is used for monitoring a pressure value of a fluid.

The pressure switch may for example be arranged to:
- assume a closed condition, when the pressure value of the fluid in the pneumatic pipe of the vehicle exceeds the first pressure threshold value S1;
- assume an open condition, when the pressure value of the fluid in the pneumatic pipe of the vehicle is lower than the first pressure threshold value S1.

In such a case, the activation system 200 may be arranged to enable the supply of the electrical power supply PS to the electronic processing means 202 when the pressure switch assumes the closed condition (that is, when the pressure value of the fluid in the pneumatic pipe of the vehicle exceeds the first pressure threshold value).

Preferably, even if after assuming the closed condition the pressure switch returns to the open condition (that is, even if the pressure value of the fluid in the pneumatic pipe of a vehicle becomes again lower than the first pressure threshold value), the activation system 200 may be arranged to continue to enable the supply of the electrical power supply to the electronic processing means 202.

In an implementation example, the activation system 200 may be, or may comprise, an electronic circuit (for example passive). Such electronic circuit may also be referred to as a stand-by/wake-up circuit.

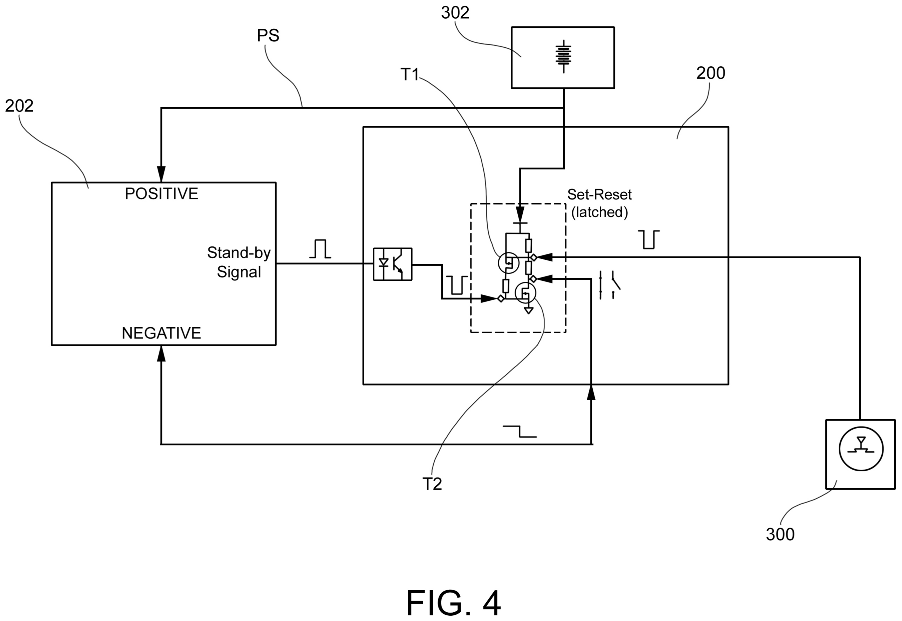

As for example observable in figure 4, the electronic circuit may comprise at least two transistors T1, T2. For example, T2 is arranged between the negative of the electronic processing means 202 and ground.

In an exemplary initial condition in which the power supply is supplied to the electronic processing means 202, the transistors T1 and T2 are conducting, so as to enable the supply of the electrical power supply PS from the power supply means to the electronic processing means. In particular, T2 closes the negative of the electronic processing means to ground, so that the battery 302 can supply power to the electronic processing means.

In the condition in which the electrical power supply PS is not supplied to the electronic processing means 202 (for example a transition to stand-by condition), the transistors T1 and T2 are not conducting, so as to prevent the supply of the electrical power supply PS from the power supply means to the electronic processing means 202. In particular, T2 opens and disconnects the negative of the electronic processing means 202 from ground, so as to prevent the battery 302 from supplying power to the electronic processing means. By way of example, in order to move to this condition, the activation system may activate the "stand-by" signal (pulse) which goes to the "RESET" port of the power SET/RESET (latched) circuit.

By way of example, in order to return to a power supply condition, the activation system may activate the "wake-up" signal (pulse) which goes to the "SET" port of the power SET/RESET circuit. In this way T1 and T2 return to conduction and the initial condition in which the unit is powered is restored.

By way of example, the electronic processing means 202 of the example illustrated in figure 4 may be arranged to perform an anti-skid function, WSP ("wheel slide protection") of at least one wheel of the vehicle.

Advantageously, the use of a passive electronic circuit further reduces the overall consumption of the available energy.

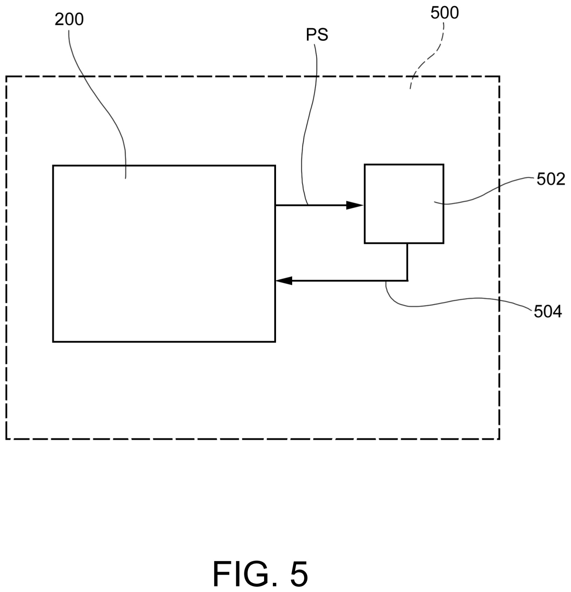

In a further aspect, the present invention relates to a control system 500 for a vehicle, particularly a railway vehicle. With reference to figure 5, an embodiment of a control system for a vehicle, particularly a railway vehicle, is described below.

The control system 500 comprises an electronic processing means 502 and an activation system 200 according to any of the embodiments described above.

Preferably, by way of non-limiting example, the electronic processing means 502 may be or comprise at least one among: a control circuit, a controller, a microcontroller, a processor, a microprocessor, an FPGA, a PLC, a processing unit, or the like.

Preferably, said electronic processing means 502 may be arranged to:
- when it receives electrical power supply PS, assume a switched-on state;
- when it does not receive electrical power supply PS, assume a switched-off state.

In the switched-on state, the electronic processing means 502 may preferably be arranged to perform a vehicle-related function.

By way of non-limiting example, the vehicle-related function may be at least one of the following:
- vehicle braking control and/or monitoring function;
- vehicle traction control and/or monitoring function;
- vehicle communication function;
- vehicle motion dynamics monitoring function;
- an anti-skid function, WSP ("wheel slide protection") of at least one wheel of the vehicle.

Clearly, the electrical energy consumption of the electronic processing means 502 will be higher in the switched-on state and zero in the switched-off state.

Preferably, in the switched-on state, the electronic processing means 502 may be arranged to:
- monitor the pressure value of the fluid in the pneumatic pipe BP of the vehicle;
- if the pressure value of the fluid in the pneumatic pipe BP of the vehicle is greater than a second pressure threshold value S2 for a time greater than a first time interval, assume a resting state.

By way of non-limiting example, considering for instance a brake pipe operating between 0 Bar and 5 Bar (as explained in the example reported above), the second pressure threshold value S2 may be higher than the first pressure threshold value S1 and may be comprised between 4.5 bar and 5 bar, particularly 4.7 bar (see for example figure 7). In general, the second threshold is set at a value at which there is a total release of the brake.

Preferably, after a second time interval from when the electronic processing means 502 has assumed the resting state, the electronic processing means may be arranged to resume the switched-on state.

Preferably, the electronic processing means 502 may be arranged to return to the resting state if/when, at the moment of resuming the switched-on state, the pressure value of the fluid in the pneumatic pipe of the vehicle is greater than the second pressure threshold value.

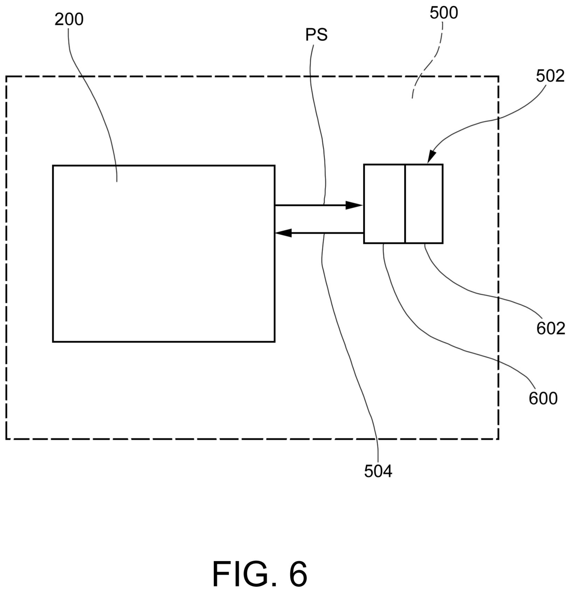

With reference for example to figure 6, a further embodiment of the control system 500 is described below. In this embodiment, the electronic processing means 502 may comprise at least a first module 600 and a second module 602.

By way of example, by module it may be meant a hardware or software sub-portion of the electronic processing means.

Preferably, when the electronic processing means 502 receives the electrical power supply, the first module 600 of the electronic processing means 502 may be arranged to assume a switched-on state.

In the switched-on state, the first module 600 may be arranged to monitor the pressure value of the fluid in the pneumatic pipe BP of the vehicle.

Preferably, if the pressure value of the fluid in the pneumatic pipe BP of the vehicle monitored by the first module 600 exceeds a second pressure threshold value S2 for a time greater than a first time interval, the first module 600 may be arranged to assume a resting state.

Preferably, after a second time interval from when the first module has assumed the resting state, the first module 600 may be arranged to resume the switched-on state.

If, at the moment of resuming the switched-on state, the pressure value of the fluid in the pneumatic pipe of the vehicle is greater than the second pressure threshold value S2, the first module 600 may be arranged to return to the resting state.

Preferably, when the first module 600 remains in the switched-on state for a time greater than a third time interval, the second module 602 of the electronic processing means 502 may also be arranged to assume a switched-on state. In the switched-on state, the second module 602 may preferably be arranged to perform a vehicle-related function. By way of non-limiting example, the first module 600 may command the second module to assume the switched-on state.

In other words, the first module of the electronic processing means may return to its resting step when the pressure value of the fluid in the pneumatic pipe BP of the vehicle monitored by the first module 600 exceeds a second pressure threshold value S2 for a time greater than a first time interval. If the first module instead determines that the pressure has not exceeded or does not exceed the second pressure threshold value, such first module may remain in its switched-on state which, after the third time interval, results in the automatic switching-on also of the second module.

By way of non-limiting example, considering for instance a brake pipe operating between 0 Bar and 5 Bar (as explained in the example reported above), also in this case the second pressure threshold value S2 may be comprised between 4.5 bar and 5 bar, particularly 4.7 bar (see for example figure 7). In general, the second threshold is set at a value at which there is a total release of the brake.

By way of example, the vehicle-related function may be at least one of the following:
- vehicle braking control and/or monitoring function;
- vehicle traction control and/or monitoring function;
- vehicle communication function;
- vehicle motion dynamics monitoring function;
- an anti-skid function, WSP, of at least one wheel of the vehicle.

Clearly, the electrical energy consumption of the electronic processing means will be:
- higher when both the first module and the second module are in the switched-on state;
- lower when the first module is in the switched-on state (or resting state) and the second module is in the switched-off state;
- zero when the first module and the second module are in the switched-off state.

In order to monitor the pressure value of the fluid in the pneumatic pipe BP of the vehicle, the first module 600 of the electronic processing means may comprise, or be associated with, a pressure sensor means. For example, the pressure sensor means may be or comprise a pressure sensor or a pressure switch or a pressure transducer.

In one example, the pressure sensor means providing the information on the pressure value in the pneumatic pipe of the vehicle may also be the same pressure sensor means 300 that provides the information on the pressure value in the pneumatic pipe BP of the vehicle to the activation system 200.

Preferably, the first module 600 and the second module 602 of the electronic processing means 502 may be arranged to assume their respective switched-off states when they do not receive electrical power supply PS.

Advantageously, the fact that the electronic processing means can selectively switch on the first module 600 and/or the second module 602 results in further energy savings since the second module may be switched on only when a specific condition occurs that requires its activation (for example in order to perform the vehicle-related function).

Preferably, the electronic processing means 502 may be arranged to transmit a shutdown signal 505 to the activation system 200 when the pressure value of a fluid in the pneumatic pipe BP of the vehicle is lower than a shutdown pressure threshold value S3 for a time greater than a fourth time interval.

By way of non-limiting example, considering for instance a brake pipe operating between 0 Bar and 5 Bar (as explained in the example reported above), the shutdown pressure threshold value S3 may be lower than the first and second threshold values S1, S2, and may be comprised between 0 bar and 0.5 bar, particularly 0.3 bar (see for example figure 7). In general, the reaching/exceeding (downwards) of the shutdown pressure threshold value is indicative of the fact that there is a fully applied brake condition (for example an emergency braking) or a vehicle switched-off condition. Therefore, the electronic processing means (e.g. the first module and the second module of the electronic processing means) may switch off.

The shutdown signal is arranged to indicate to the activation system that the supply of electrical power should be prevented so as to cause the electronic processing means to switch off.

For measuring the time intervals, the first module 600 of the electronic processing means may comprise, or be associated with, a timing means. By way of non-limiting example, the timing means may be or comprise a timer.

By way of example, the first time interval, the second time interval, the third time interval and the fourth time interval may be equal to each other, or the first time interval, the second time interval, the third time interval and the fourth time interval may be different from each other.

For example, the time intervals may be:
- first time interval: 20-40 seconds, preferably 30 seconds;
- second time interval: 40-80 seconds, preferably 60 seconds;
- third time interval: 1-3 seconds, preferably 2 seconds;
- fourth time interval: 40-80 seconds, preferably 60 seconds.

Figure 7 illustrates a graph showing an exemplary trend of the pressure value in the pneumatic pipe of the vehicle (including the threshold values S1, S2 and S3).

Preferably, the electronic processing means 502 may be comprised in a tread brake assembly.

In a further aspect, the present invention relates to a method for activating an electronic processing means of a vehicle, particularly a railway vehicle. Such activation method comprises the steps of:
- measuring a pressure value of a fluid in a pneumatic pipe of the vehicle;
- when the pressure value of the fluid in the pneumatic pipe of the vehicle exceeds a first pressure threshold value, enabling the supply of an electrical power supply to the electronic processing means of the vehicle.

All the embodiments described above for the activation system, even if not repeated here, may find analogous application for the activation method just described.

In a further implementation example, the present disclosure relates to a vehicle comprising:
- a pneumatic pipe arranged to convey a fluid;
- a control system according to one of the embodiments described above.

In a further implementation example, the present disclosure relates to a vehicle comprising:
- a pneumatic pipe arranged to convey a fluid;
- an electronic processing means; and
- an activation system according to one of the embodiments described above.

Terms such as "process", "calculate" or "determine" refer to the operations performed by processing means (e.g. a control circuit), which may include computer systems or electronic devices that manipulate data represented as physical (electronic) quantities within memories or registers. One or more components may be described as "configured to", "configurable to", "operable to", "adapted to", "arranged to" or similar terms. Unless explicitly indicated, these terms include components both in an active state and in an inactive state. Unless otherwise specified, terms such as "including" or "having" should be interpreted in a broad sense (i.e. "including but not limited to"). Numerical indications generally refer to "at least" the indicated number, and disjunctive terms such as "A or B" should be interpreted as including one or both, unless explicitly specified. The operations contained in a claim may be performed in any order, unless explicitly indicated. The expression "at least one of A, B and C" should be interpreted as any combination of A, B and C, such as A alone, B alone, C alone, A and B together, A and C together, B and C together and/or A, B and C together. The phrase "at least one of A, B or C" should be interpreted as a combination of A, B, C, A and B, A and C, B and C and/or A, B and C together.

The present written description may disclose several embodiments of the invention, including the best mode, and may enable a person of ordinary skill in the art to practise the embodiments of the invention, including making and using any device or system and performing any incorporated method. The patentable scope of the invention is defined by the claims and may include other embodiments that may be realised by a person of ordinary skill in the art. Such other embodiments may be understood as falling within the scope of the claims if they may have structural elements that do not differ from the literal language of the claims, or if they may include equivalent structural elements with insubstantial differences from the literal language of the claims.

The advantage achieved is therefore that of having provided a solution that allows improving the management of the activation of a control means installed on board a vehicle, in order to reduce its energy consumption.

Various aspects and embodiments of an activation system for an electronic processing means of a vehicle, a method for activating an electronic processing means of a vehicle and a control system for a vehicle according to the invention have been described. It is understood that each embodiment may be combined with any other embodiment. Furthermore, the invention is not limited to the embodiments described, but may be varied within the scope defined by the appended claims.

## Claims

1. An activation system (200) for an electronic processing means (202) of a vehicle (V), particularly a railway vehicle, arranged to:
- when a pressure value of a fluid in a pneumatic pipe (BP) of the vehicle (V) exceeds a first pressure threshold value (S1), enabling the supply of an electrical power supply (PS) to the electronic processing means (202) of the vehicle.

2. Activation system (200) according to claim 1, wherein the activation system is arranged to:
- when it receives a shutdown signal (204) from said electronic processing means (202), interrupt or prevent the supply of the electrical power supply (PS) to the electronic processing means (202).

3. Activation system (200) according to claim 1 or 2, wherein said activation system comprises or is coupled to a pressure sensor means (300) arranged to monitor the pressure value of the fluid in the pneumatic pipe (BP) of the vehicle (V).

4. Activation system (200) according to claim 3, wherein said pressure sensor means (300):
- is a pressure switch or comprises a pressure switch; or,
- is a pressure transducer or comprises a pressure transducer.

5. Activation system (200) according to claim 4, wherein said pressure switch is arranged to:
- assume a closed condition, when said pressure value of the fluid in the pneumatic pipe (BP) of the vehicle exceeds the first pressure threshold value (S1);
- assume an open condition, when said pressure value of the fluid in the pneumatic pipe (BP) of the vehicle is lower than the first pressure threshold value (S1).

6. Activation system (200) according to claim 5, wherein the activation system is arranged to allow the supply of electrical power supply (PS) to the electronic processing means (202) when the pressure switch assumes the closed condition.

7. Activation system (200) according to claim 6, wherein, even if after assuming the closed condition the pressure switch returns to the open condition, the activation system is arranged to continue to allow the supply of electrical power supply (PS) to the electronic processing means (202).

8. A control system (500) for a vehicle, particularly a railway vehicle, comprising:
- an electronic processing means (502);
- an activation system (200) according to any of the preceding claims.

9. Control system (500) according to claim 8, wherein said electronic processing means (502) is arranged to:
- when it receives electrical power supply (PS), assume a switched-on state; wherein, preferably, in the switched-on state the electronic processing means (502) is arranged to perform a vehicle-related function;
- when it does not receive electrical power supply (PS), assume a switched-off state.

10. Control system (500) according to claim 9, wherein, in the switched-on state, the electronic processing means (502) is arranged to:
- monitor the pressure value of the fluid in the pneumatic pipe (BP) of the vehicle;
- if the pressure value of the fluid in the pneumatic pipe of the vehicle is greater than a second pressure threshold value (S2) for a time greater than a first time interval, assume a resting state.

11. Control system (500) according to claim 10, wherein, after a second time interval from when said electronic processing means (502) has assumed the resting state, the electronic processing means (502) is arranged to resume the switched-on state.

12. Control system (500) according to claim 11, wherein said electronic processing means (502) is arranged for:
- if, when the switched-on state is resumed, the pressure value of the fluid in the pneumatic pipe (BP) of the vehicle is greater than said second pressure threshold value (S2), returning to the resting state.

13. Control system (500) according to claim 8, wherein said electronic processing means (502) comprises at least a first module (600) and a second module (602).

14. Control system (500) according to claim 13, wherein, when said electronic processing means (502) receives said electrical power supply:
- the first module (600) of the electronic processing means (502) is arranged to assume a switched-on state;
wherein, in the switched-on state, the first module (600) is arranged to monitor the fluid pressure value in the pneumatic pipe (BP) of the vehicle.

15. Control system (500) according to claim 14, wherein, if the fluid pressure value in the pneumatic pipe (BP) of the vehicle monitored by the first module (600) exceeds a second pressure threshold value (S2) for a time greater than a first time interval, the first module (600) is arranged to assume a resting state.

16. Control system according to claim 15, wherein, after a second time interval from when said first module (600) has assumed the resting state, the first module (600) is arranged to resume the switched-on state;
wherein, if at the moment of resumption of the switched-on state the pressure value of the fluid in the pneumatic pipe (BP) of the vehicle is greater than said second pressure threshold value (S2), the first module (600) is arranged to return to the resting state.

17. Control system according to any one of claims 13 to 16, wherein, when the first module (600) remains in the switched-on state for a time greater than a third time interval, the second module (602) of the electronic processing means (502) is also arranged to assume a switched-on state;
wherein, preferably, in the switched-on state the second module (602) is arranged to perform a vehicle-related function.

18. Control system according to any one of claims 13 to 17, wherein said first module (600) and said second module (602) of the electronic processing means are arranged to:
- when they are not receiving electrical power supply, assuming their respective switched-off states.

19. Control system (500) according to any one of claims 8 to 18, wherein said electronic processing means (502) is arranged to transmit a shutdown signal (504) to the activation system (200) when the pressure value of the fluid in the pneumatic pipe of the vehicle is less than a shutdown pressure threshold value (S3) for a time greater than a fourth time interval.

20. Control system (500) according to any one of claims 9 to 19, wherein said vehicle-related function is at least one of the following:
- vehicle braking control and/or monitoring function;
- vehicle traction control and/or monitoring function;
- vehicle communication function;
- vehicle motion dynamics monitoring function;
- an anti-skid function for at least one vehicle wheel.

21. Control system (500) according to any of claims 8 to 20, wherein said electronic processing means (502) is comprised in a tread brake assembly.

22. A method for activating an electronic processing means of a vehicle, particularly a railway vehicle, comprising the steps of:
- measuring a pressure value of a fluid in a pneumatic pipe of the vehicle;
- when the pressure value of the fluid in the pneumatic pipe of the vehicle exceeds a first pressure threshold value (S1), enabling the supply of an electrical power supply to the electronic processing means of the vehicle.
